**Europäisches Patentamt**

**European Patent Office**

**Office européen des brevets**

(11) Veröffentlichungsnummer: **0 315 883**
**A2**

## EUROPÄISCHE PATENTANMELDUNG

(21) Anmeldenummer: 88118205.9

(51) Int. Cl.⁴: **B23B 31/12**

(22) Anmeldetag: 02.11.88

(30) Priorität: 11.11.87 DE 3738227

(43) Veröffentlichungstag der Anmeldung:
**17.05.89 Patentblatt 89/20**

(84) Benannte Vertragsstaaten:
**CH DE FR IT LI**

(71) Anmelder: **Kulzer GmbH**
**Philipp-Reis-Strasse 8**
**D-6393 Wehrheim (TS.)1(DE)**

(72) Erfinder: **Grimm, Ekkehard**
**Blumenstrasse 44**
**D-6050 Offenbach(DE)**
Erfinder: **Gerhard, Peter**
**Stettiner Ring 17**
**D-6382 Friedrichsdorf(DE)**

(74) Vertreter: **Heinen, Gerhard, Dr.**
**Heraeus Holding GmbH Heraeusstrasse**
**12-14**
**D-6450 Hanau am Main(DE)**

(54) **Haltevorrichtung für Werkstücke.**

(57) Es ist eine Haltevorrichtung für Werkstücke mit mindestens zwei Halteteilen bekannt, die in Ausnehmungen, wie Schlitze und/oder Nuten, geführt in ihrem Abstand zu einem gemeinsamen Mittelpunkt gleichzeitig verschiebbar angeordnet sind. Um eine Haltevorrichtung zur Aufnahme von Werkstücken derart auszubilden, daß der Abstand zwischen den Halteteilen schnell um eine größere Strecke gegeneinander verändert werden kann, wobei diese Haltevorrichtung auch für Werkstücke unterschiedlicher Außenkontur, beispielsweise Dentalprothesenteile, geeignet sein soll, ist jedes Halteteil in jeweils zwei sich kreuzenden Ausnehmungen (Schlitze) verschiebbar geführt, wobei die einen Ausnehmungen einem ersten Plattenelement und die anderen Ausnehmungen einem zweiten Plattenelement, die die Führungsteile bilden, zugeordnet sind, die übereinander liegen und gegeneinander um eine durch ihren gemeinsamen Mittelpunkt führende Achse verdrehbar sind, und wobei die Ausnehmungen der beiden Plattenelemente gegenläufige Steigungen aufweisen.

EP 0 315 883 A2

## Haltevorrichtung für Werkstücke

Die vorliegende Erfindung betrifft eine Haltevorrichtung für Werkstücke, insbesondere für zu behandelnde und zu bearbeitende Dentalteile, mit mindestens zwei Halteteilen, die jeweils in zwei sich kreuzenden Ausnehmungen, wie Schlitze und/oder Nuten, mit gegenläufigen Steigungen, in ihrem Abstand zu einem gemeinsamen Mittelpunkt gleichzeitig verschiebbar geführt sind, wobei jeweils die einen Ausnehmungen einem ersten Plattenelement und die anderen Ausnehmungen einem zweiten Plattenelement zugeordnet sind, die übereinanderliegen und gegeneinander um eine durch ihren gemeinsamen Mittelpunkt führende Achse verdrehbar sind

Haltevorrichtungen sind allgemein bekannt. Mit solchen Haltevorrichtungen können zwischen den Klemmbacken, die beispielsweise über eine drehbare Gewindespindel gegeneinander verschiebbar sind, Werkstücke zur Bearbeitung festgeklemmt werden. Diese Haltevorrichtungen sind als Spannzangen oder Spannstöcke im Handel. Um den Abstand zwischen den Halteteilen oder Klemmbacken zu verändern, muß die Spindel mehrfach verdreht werden, was insbesondere dann zeitaufwendig wird, wenn nacheinander Werkstücke unterschiedlicher Abmessungen eingespannt werden sollen.

Weiterhin sind Spannvorrichtungen in Drehbänken zum Halten von Werkstücken, die spanabhebend bearbeitet werden sollen, bekannt. Bei den dort eingesetzten Spannköpfen werden durch Verdrehen einer Spindel drei Spannteile radial in Richtung der Drehachse verschoben. Ähnliche Spannköpfe werden als Spannfutter bei Bohrmaschinen verwendet. Auch bei diesen Spannvorrichtungen ist bei einem Wechsel des eingespannten Werkstückes oder Werkzeuges eine Vielzahl von Umdrehungen einer Spindel notwendig.

Aus der DE-PS 259 320 ist eine Haltevorrichtung der eingangs beschriebenen Art bekannt, die für das Zusammenfügen von Schläuchen eingesetzt wird. Dieses Werkzeug besitzt zwei aufeinanderliegende, drehbar miteinander verbundene Scheiben, die jeweils am Ende eines Griffes angeordnet sind. Jede Scheibe besitzt vier Schlitze, wobei die Schlitze der einen Scheibe sich von der Drehachse aus exakt radial nach außen erstrecken, während die anderen Schlitze der zweiten Scheibe die Schlitze der ersten Scheibe unter einem Winkel schneiden. Im Schnittpunkt dieser Schlitze sind Klemmbacken geführt, die sich mit dem Verdrehen der beiden Scheiben gegeneinander nach außen oder nach innen verschieben. Die vier Klemmbacken können in das Ende eines Schlauches eingeschoben werden, un diesen aufzuweiten. Die Art des Verlaufes der Schlitze in den beiden Scheiben kann zu einem Verklemmen der Klemmbacken führen.

Aus der GB-A 146 557 ist eine Zentriereinrichtung mit einem Vakuum-Halteteil zum Ansaugen von Werkstücken, um das herum mehrere Halteteile angeordnet sind, bekannt. Diese Halteteile in Form von Stiften werden in Schlitzen geführt, die sich zum Zentrum der Anordnung hin erstrecken. Jedes dieser Halteteile ist mit einem Gelenkarm unterhalb der Scheibe oder Auflage, die die Schlitze führt, verbunden, so daß die Halteteile beim Verdrehen der Scheibe ihren Abstand zum Zentrum verändern.

Aus der US-PS 3,724,299 ist eine sogenannte Ratsche oder Knarre bekannt, die zum Verdrehen von Sechskantschrauben oder -muttern dient. Der Schlüsselkopf ist in vier Teile unterteilt, die in ihrem Abstand zueinander verstellt werden können, um damit Seckskantschrauben oder -muttern unterschiedlicher Größe zu verklemmen. Die einzelnen Teile sind hierzu in Nuten und Federn geführt und können in verschiedenen Stellungen einrasten.

Der vorliegenden Erfindung liegt nun die Aufgabe zugrunde, eine Haltevorrichtung zur Aufnahme von Werkstücken zu schaffen, bei der der Abstand zwischen den Halteteilen schnell um eine größere Strecke gegeneinander verändert werden kann, ohne daß ein Verklemmen auftritt, wobei diese Haltevorrichtung auch für Werkstücke unterschiedlicher Außenkontur, beispielsweise Dentalprothesenteile, geeignet sein soll.

Diese Aufgabe wird erfindungsgemäß dadurch gelöst, daß jedes Plattenelement in mehrere Sektoren unterteilt ist, wobei die Spitze jedes Sektors mit der Achse zusammenfällt und die einzelnen Sektoren eine oder mehrere der Ausnehmungen gleicher Größe, Form und Lage im Sektor aufweisen und wobei die Ausnehmungen einen Teil einer Spirale beschreiben und die Tangenten der sich kreuzenden, einem Halteteil zugeordneten Ausnehmungen in ihrem Schnittpunkt in radialer Richtung gesehen einen äußeren Winkel größer 90° einschließen.

Bei dieser Haltevorrichtung wird durch ein Verdrehen der beiden Plattenelemente, die die gegenläufigen Ausnehmungen mit den darin geführten Halteteilen aufweisen, ein Verschieben der Halteteile zu dem gemeinsamen Mittelpunkt, der gleichzeitig die Drehachse der Plattenelemente bildet, erzielt. Je nach Wahl der Steigung der spiralförmig verlaufenden Ausnehmungen kann die Verschiebestrecke der Halteteile zum Mittelpunkt in Abhängigkeit des Drehwinkels verändert werden. Die Tangenten der sich kreuzenden, einem Halteteil zugeordneten Ausnehmungen im Schnittpunkt der Ausnehmungen in radialer Richtung gesehen einen Winkel größer 90° ein. Bei einem Winkel im Bereich von 90° wird das in die Ausnehmungen eingreifende Halteteil, ohne daß ein Verdrehen oder Verklemmen auftritt, leicht in radialer Richtung nach außen oder nach innen vom Mittelpunkt aus gesehen verschoben. Für eine solche Anordnung sind auch Winkel kleiner 90° wird die Anordnung schwergängig, da die Reibungskräfte der Halteteile in den Ausnehmungen wesentlich größer werden.

Bei dem Einsatz von drei oder mehr Halteteilen, wobei die maximale Anzahl auf fünf begrenzt sein sollte und die bevorzugte Anzahl bei vier liegt, ist gewährleistet, daß auch Werkstücke mit asymmetrischer Außenkontur, wie insbesondere Dentalprothesenteile, sicher durch die Anlage von mindestens drei Halteteilen gehalten werden.

Weitere Einzelheiten und Merkmale der Erfindung ergeben sich aus der nachfolgenden Beschreibung eines Ausführungsbeispiels anhand der Zeichnung. In der Zeichnung zeigt

Figur 1 eine Haltevorrichtung mit vier Halteteilen in einer Draufsicht,

Figur 2 die Haltevorrichtung nach Figur 1, in der die Halteteile radial nach außen verschoben sind,

Figur 3 zwei einander zugeordnete Ausnehmungen in einer vergrößerten Darstellung, und

Figur 4 einen Querschnitt durch eine Haltevorrichtung mit einer Antriebsmechanik.

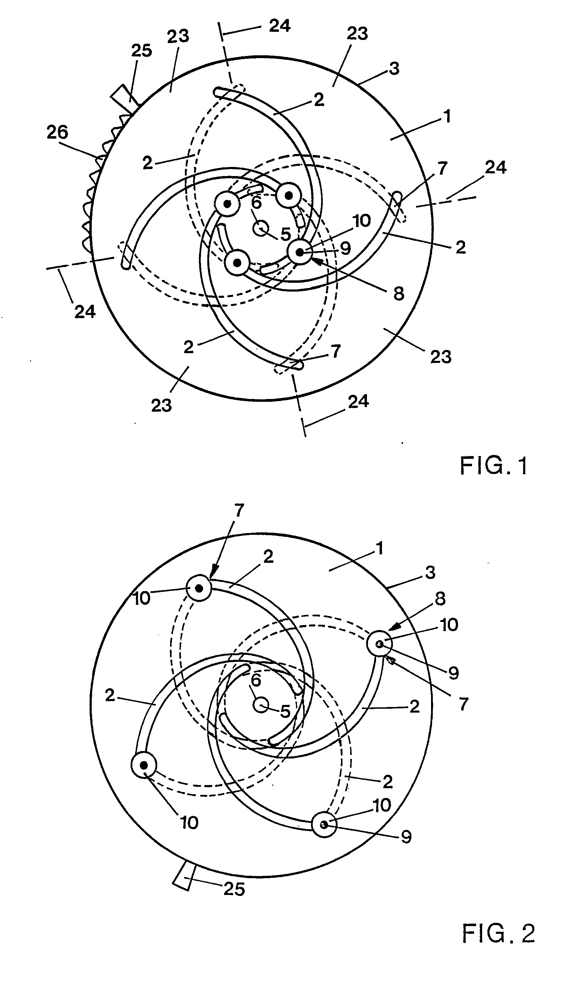

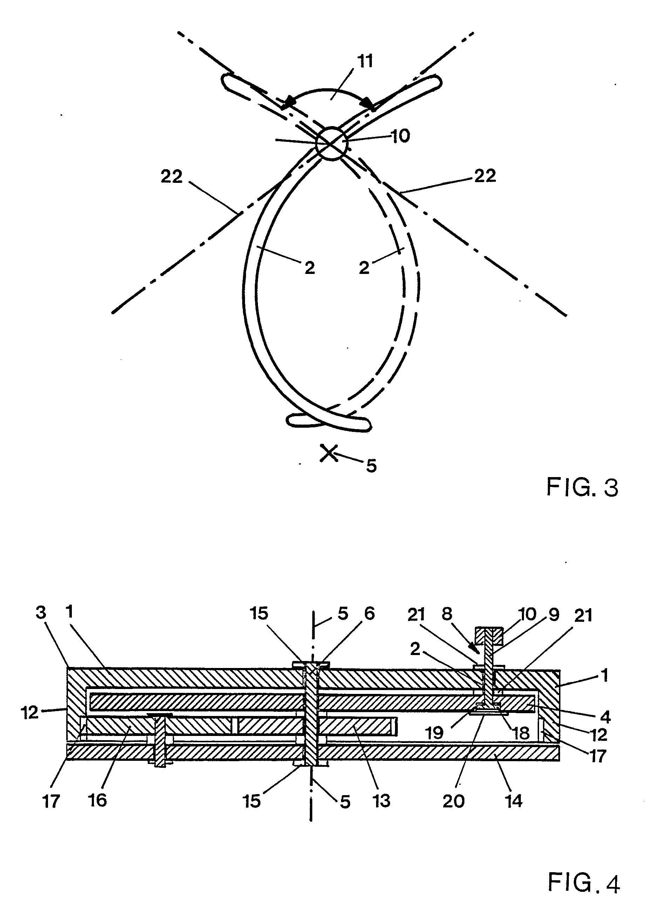

Die Haltevorrichtung weist ein oberes Plattenelement 1 mit in Form von Schlitzen 2 ausgebildeten Ausnehmungen auf, die spiralförmig von einem inneren Bereich zum äußeren Rand 3 des Plattenelementes verlaufen. Unterhalb dieses Plattenelementes 1 ist ein weiteres Plattenelement 4 angeordnet, wie dies anhand der Figur 4 ersichtlich ist. Beide Plattenelemente 1, 4 sind um eine gemeinsame Drehachse 5, die durch einen Bolzen 6 gebildet ist, gegeneinander verdrehbar. Während das obere Plattenelement 1, wie die Figuren 1 und 2 zeigen, vier Schlitze 2 aufweist, die jeweils Teil einer rechtsdrehenden Spirale bilden, weist das weitere Plattenelement 4 unterhalb des oberen Plattenelements 1 vier Schlitze auf, die jeweils Teil einer rechtsdrehenden Spirale sind. Das obere Plattenelement 1 und das weitere Plattenelement 4 weisen also gleiche, jedoch spiegelbildliche Schlitze 2 auf. Beide Plattenelemente 1, 4 besitzen eine Dicke, je nach dem eingesetzten Material von 2 bis 4 mm.

Durch die spiegelbildlichen Schlitze 2 entstehen Kreuzungspunkte 7, wobei jedem Paar der Schlitze 2 ein Halteteil 8 in Form eines Stiftes 9 zugeordnet ist, der im Bereich eines solchen Kreuzungspunktes 7 durch beide Schlitze 2 hindurchführt. Die einzelnen Stifte 9, im vorliegenden Fall vier, tragen an ihrem oberen Ende eine Klemmbacke 10 in Form eines aufgesteckten Ringes. Durch Verdrehen beider Plattenelemente 1 und 4 gegeneinander verschieben sich die vier Halteteile 8 von einer inneren Stellung, wie dies die Figur 1 zeigt, in eine äußere Stellung, wie dies in Figur 2 wiedergegeben ist. Um in dieser Haltevorrichtung ein zu behandelndes Teil, beispielsweise ein Dentalprothesenteil, einzuspannen, werden die Halteteile 8 mit den Klemmbacken 10 in eine äußere Stellung verfahren, das Teil zwischen die Klemmbacken 10 eingelegt und durch Verdrehen der beiden Plattenelemente 1, 4 gegeneinander an das Werkstück herangefahren, bis dies zwischen den einzelnen Klemmbacken 10 zentriert und gehalten wird. Um ein leichtes Verschieben der Klemmbacken 10, die in beiden Plattenelementen 1, 4 lose geführt sind, zu gewährleisten, sind die gegenläufigen Schlitze 2 so ausgeführt, daß sich die Tangenten 22 ihrer Krümmung im Kreuzungspunkt unter einem Winkel 11 auf der zum Rand 3 der Plattenelemente 1, 4 hinweisenden Seite schneiden, wobei der Winkel 11 etwa 110° beträgt.

Spitzere Winkel 11 sollten vermieden werden, da solche Verläufe der Schlitze 2 ein klemmfreies Verschieben der Halteteile 8 nicht gewährleisten. Größere Winkel 11, d.h. spiralförmige Verläufe der Schlitze 2 mit geringerer Steigung, dagegen führen zu einem leichteren Verschieben der Halteteile 8, jedoch mit der Folge, daß mit geringerer Steigung der Schlitze 2 der Drehweg der beiden Plattenelemente 1 und 4 vergrößert wird, um einen erforderlichen radialen Verschiebeweg der Halteteile 8 zur Drehachse 5 hin oder weg zu erzielen. Durch die Schlitze 2 werden die Plattenelemente 1, 4 in vier gleiche Sektoren 23, durch die unterbrochenen Linien 24 angedeutet, unterteilt, deren Spitzen mit der Drehachse 25 zusammenfallen.

Eines der beiden Plattenelemente 1, 4 kann als gehäusefestes Teil ausgebildet sein und so beispielsweise eine Grundplatte bilden; falls relativ zu dem einen gehäusefesten Plattenlement das andere Plattenelement verdreht wird, führt dies dazu, daß sich die Halteteile 8 nicht nur in radialer Richtung auf einer geraden Linie verschieben, sondern dem Verlauf der Schlitze 2 folgen. Um die Klemmbacken 10 auf einer geraden Linie radial zur Drehachse 5 zu verschieben, müssen die beiden Plattenelemente 1 und 4 mit gleicher Geschwindigkeit in gegenläufigen Richtungen verdreht werden. Dies kann mit einer Anordnung erzielt werden, wie sie in Figur 4 dargestellt ist. Hierbei ist das obere Plattenelement 1 mit einem nach unten übergreifenden Platten-Rand 12 versehen, unter dem an dem gemeinsamen Bolzen 6 das weitere Plattenelement 4 angeordnet ist. Sowohl dieses weitere Plattenelement 4 als auch ein darunter befindliches Antriebszahnrad 13 sind mit dem Bolzen 6 drehfest verbunden, während der Bolzen 6 in dem oberen Plattenelement 1 sowie in einer Trägerplatte 14 drehbar geführt ist, wobei er an seinen beiden Enden durch jeweils einen Sprengring 15 gesichert ist. In das Antriebszahnrad 13 greift ein Zwischenzahnrad 16 ein, das seinerseits mit seiner Zahnung in einen Innenzahnkranz 17 eingreift, der am inneren Platten-Rand 12 des oberen Plattenelementes 1 ausgbildet ist. Das Zwischenzahnrad 16 ist ebenfalls an der Trägerplatte 14 gelagert; das Antriebszahnrad 13 und das Zwischenzahnrad 16 weisen eine gleiche Anzahl an Zähnen auf. Wird nun das obere Plattenelement 1 nach rechts gedreht, so erfährt das Zwischenzahnrad 16 eine Drehung in gleicher Richtung, während diese Rechtsdrehung auf das Antriebszahnrad 13 übertragen eine Linksdrehung des Antriebszahnrads 13 zur Folge hat, das entsprechend den Bolzen 6 und das an dem Bolzen fest angeordnete Plattenelement 4 links dreht, d.h. gegen den Uhrzeigersinn. Mit einer Verdrehung des oberen Plattenelementes 1 um einen bestimmten Winkel verdreht sich das untere Plattenelement 4 um denselben Winkel, jedoch mit gegenläufigem Drehsinn.

In Figur 4 ist nur eines der Halteteile 8 dargestellt, das durch den Schlitz 2 im oberen Plattenelement 1 hindurchführt und durch einen entsprechenden gegenläufigen Schlitz 2 im weiteren Plattenelement 4 geführt ist, mit einem verbreiterten Bereich 18, der in einer Nut 19 einliegt. Diese Nut 19 wird durch eine Abdeckplatte 20 verschlossen, so daß das Halteteil 8 gesichert ist. Anstelle der Abdeckplatte 20 kann entweder oberhalb des Plattenelementes 1 oder oberhalb des weiteren Plattenelementes 4 ein Sicherungsring 21 auf den Stift 9 aufgeklemmt sein, der das Halteteil 8 in den Schlitze 2 gegen ein Herausfallen sichert. Zur besseren Übersicht sind in Figur 4 die einzelnen Schlitze 2 sowie die weiteren Halteteile 8 nicht dargestellt; sie sind jedoch entsprechend dem beschriebenen Halteteil 8 ausgeführt.

Zur leichteren Handhabung der Vorrichtung ist an dem oberen Plattenelement 1 an dessen Rand 3 ein Hebel 25 angeordnet. Damit die Halteteile 8 von einer nach außen verschobenen Stellung selbsttätig in eine Klemmstellung, in der die Klemmbacken 10 zur Drehachse 5 hin verschoben werden, verfahren, ist eine Spiralfeder 26 am Rand 3 des oberen Plattenelementes 1 mit ihrem einen Ende befestigt, während das andere Ende mit dem weiteren Plattenelement 4 verbunden ist. Mit dem Verschieben der Klemmbacken 10 radial nach außen, d.h. unter Verdrehen des oberen Plattenelements 1 gegen das weitere Plattenelement 4 gegen den Uhrzeigersinn wird das Federelement 26 ge-spannt.

**Ansprüche**

1. Haltevorrichtung für Werkstücke, insbesondere für zu behandelnde und zu bearbeitende Dentalteile, mit mindestens zwei Halteteilen, die jeweils in zwei sich kreuzenden Ausnehmungen, wie Schlitze und/oder Nuten, mit gegenläufigen Steigungen, in ihrem Abstand zu einem gemeinsamen Mittelpunkt gleichzeitig verschiebbar geführt sind, wobei jeweils die einen Ausnehmungen einem ersten Plattenelement und die anderen Ausnehmungen einem zweiten Plattenelement zugeordnet sind, die übereinanderliegen und gegeneinander um eine durch ihren gemeinsamen Mittelpunkt führende Achse verdrehbar sind, dadurch gekennzeichnet, daß jedes Plattenelement in mehrere Sektoren (23) unterteilt ist, wobei die Spitze jedes Sektors (23) mit der Achse (5) zusammenfällt und die einzelnen Sektoren (23) eine oder mehrere der Ausnehmungen (2) gleicher Größe, Form und Lage im Sektor (23) aufweisen und wobei die Ausnehmungen (2) einen Teil einer Spirale beschreiben und die Tangenten (22) der sich kreuzenden, einem Halteteil (8) zugeordneten Ausnehmungen (20 in ihrem Schnittpunkt in radialer Richtung gesehen einen äußeren Winkel (11) größer 90° einschließen.

2. Haltevorrichtung nach Anspruch 1, dadurch gekennzeichnet, daß drei Halteteile (8) einer entspechenden Anzahl an Ausnehmungen (2) in den Plattenelementen (1, 4) zugeordnet sind.

3. Haltevorrichtung nach Anspruch 1 oder 2, dadurch gekennzeichnet, daß mindestens eines der beiden Plattenelemente (1, 4) durch ein oder mehrere Federelemente (26) gegenüber dem anderen Plattenelement (1, 4) in einer Klemmstellung gehalten ist.

4. Haltevorrichtung nach einem der Ansprüche 1 bis 3, dadurch gekennzeichnet, daß eines der Plattenelemente (1, 4) feststehend angeordnet ist.

5. Haltevorrichtung nach einem der Ansprüche 1 bis 4, dadurch gekennzeichnet, daß die beiden Plattenelemente (1, 4) gegenläufig drehbar angeordnet sind, wobei die gegenläufigen Drehbewegungen über einen Antrieb miteinander gekoppelt sind.

6. Haltevorrichtung nach Anspruch 5, dadurch gekennzeichnet, daß der Antrieb durch Zahnräder (15, 16) und Zahnkränze (17) gebildet ist.

7. Haltevorrichtung nach Anspruch 6, dadurch gekennzeichnet, daß das untere Plattenelement (4) mit einem die Drehachse (5) bildenden Bolzen (6) drehfest verbunden ist, an dem gleichzeitig das obere Plattenelement (1) drehbar gelagert ist, wobei das obere Plattenelemente (1) einen das untere Plattenelement (4) übergreifenden Rand (12) aufweist mit einem Innenzahnkranz (17), wobei in den Innenzahnkranz (17) ein Zwischenzahnrad (16) eingreift, das seinerseits in ein Antriebszahnrad (13), das unterhalb des unteren Plattenelementes (4) mit dem Bolzen (6) drehfest verbunden ist, eingreift.

8. Haltevorrichtung nach Anspruch 7, dadurch gekennzeichnet, daß das Zwischenzahnrad (16) und das Antriebszahnrad (13) eine gleiche Anzahl an Zähnen aufweisen.

FIG. 1

FIG. 2

FIG. 3

FIG. 4